# EUROPÄISCHE PATENTSCHRIFT

(11) **EP 1 615 163 B1**
(45) Veröffentlichungstag und Bekanntmachung des Hinweises auf die Patenterteilung: **19.09.2007**
(21) Anmeldenummer: 05014359.3
(22) Anmeldetag: 01.07.2005
(51) Int. Cl.: G06K 19/07

(54) **Transponder mit einer Taktversorgungseinheit**
Transponder having a clock generator
Transpondeur avec un générateur d'horloge

(30) Priorität: 06.07.2004 DE 102004032547
(43) Veröffentlichungstag der Anmeldung: 11.01.2006
(73) Patentinhaber: ATMEL Germany GmbH, 74072 Heilbronn (DE)
(72) Erfinder: Ziebertz, Dirk, Dipl.-Ing., 74246 Eberstadt (DE)

(56) Entgegenhaltungen:
- EP-A- 1 394 944
- US-A1- 2002 097 144

## Beschreibung

Die Erfindung betrifft einen Transponder mit einer Taktversorgungseinheit.

Derartige Transponder werden in sogenannten Radio-Frequency-Identification(RFID)-Systemen verwendet. Hierbei werden zwischen einer oder mehreren Basisstationen bzw. Lesegeräten und einem oder mehreren Transpondern drahtlos Daten bidirektional übertragen. Auf dem Transponder können auch Sensoren, beispielsweise zur Temperaturmessung, integriert sein. Derartige Transponder werden auch als Remote-Sensoren bezeichnet.

Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die sogenannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

Die Transponder verfügen in der Regel über eine Taktversorgungseinheit, die unter anderem zur Auswertung bzw. Dekodierung empfangener Signale dienen kann. Wenn die übertragenen Daten beispielsweise mit Hilfe der Puls-Weiten-Modulation kodiert werden, kann die Pulsdauer mit Hilfe der Taktversorgungseinheit gemessen werden. Die Taktversorgungseinheit dient hierbei beispielsweise zur Taktung eines digitalen Zählers, dessen Zählerstand dann einer entsprechenden Pulsdauer entspricht.

Herkömmliche Taktversorgungseinheiten sind üblicherweise als Oszillatoren, beispielsweise als RC-Oszillatoren, ausgeführt. Im Normalfall ist die Taktversorgungseinheit freilaufend, d.h. sie ist nicht mit einer Sendeeinheit der Basisstation synchronisiert. Dies kann zu sogenannten Jitter-Effekten bei der Auswertung des empfangenen Signals im Transponder führen. Da eine Synchronisierung einen möglichst unverzögerten Anlauf der Taktversorgung voraussetzt, ist eine Synchronisierung bei Verwendung der herkömmlichen Taktversorgungseinheiten in der Regel schwierig bzw. nicht möglich, da die Oszillatoren eine gewisse Einschwingzeit bzw. Anlaufzeit benötigen.

US 2002/009 7144 (Collins et al.) offenbart einen passiven Transponder mit einer Taktversorgungseinheit, die einen Ringoszillator umfasst.

Ein Ringoszillator besteht aus einer geschlossenen Kette von in Serie geschalteten Invertern. Die Anzahl der Inverter ist ungerade. Der Ausgang des letzten Inverters ist wieder mit dem Eingang des ersten Inverters verbunden. Auf diese Weise entsteht ein Rechteckoszillator, dessen Schwingfrequenz durch die Verzögerungszeit der jeweiligen Inverter bestimmt wird. Die Verwendung eines Ringoszillators als Taktquelle ermöglicht ein praktisch unverzögertes Aus- bzw. Einschalten der Taktquelle durch Unterbrechen bzw. Schließen der Inverterkette, da jeder Inverter der Kette stets einen stabilen Zustand einnimmt. Ein Einschwingvorgang, beispielsweise wie bei einem RC-Oszillator, tritt nicht auf. Dies ermöglicht eine Synchronisation der Taktquelle mit einer externen Taktquelle, beispielsweise einer Basisstation, wodurch Jitter-Effekte weitgehend vermieden werden können.

Der Erfindung liegt als technisches Problem die Bereitstellung eines Transponders mit einer Taktversorgungeinheit, die einen Ringoszillator umfasst, der eingangs genannten Art zugrunde, die eine verbesserte Übertragungsreichweite und verbesserte Anpassung der Frequenz des Ringoszillators an vorherrschende Umgebungsbedingungen aufweist.

Die Erfindung löst dieses Problem durch die Bereitstellung eines Transponders mit den Merkmalen des Anspruchs 1.

Der Ringoszillator ist in Source-Coupled-Logik(SCL)-Technik aufgebaut. Aufgrund der verwendeten differentiellen Signalübertragung verbessert sich die Unempfindlichkeit gegenüber Gleichtaktstörungen, beispielsweise gegenüber dynamischen Versorgungsspannungsschwankungen. Dadurch kann mit geringeren Signalspannungshüben gearbeitet werden, wodurch sich der Stromverbrauch im Vergleich zu Systemen, die mit vollem Versorgungsspannungshub arbeiten, reduziert. Dies verbessert wiederum die Übertragungsreichweite, insbesondere bei passiven Transpondem.

Der Transponder umfasst eine Frequenzsteuereinheit, die in Abhängigkeit von einer einzustellenden Taktfrequenz einen Betriebsparameter des Ringoszillators einstellt. Dies ermöglicht es, die Frequenz der Taktversorgungseinheit in gewissen Grenzen an vorherrschende Umgebungsbedingungen anzupassen. Dies ist bei herkömmlichen Taktversorgungseinheiten nur mit hohem schaltungstechnischem Aufwand möglich. Der Betriebsparameter ist eine Bias-Spannung eines Source-Coupled-Logik-Bausteins. Durch Änderung der Bias-Spannung ändert sich die Verzögerungszeit des oder der Inverter und dadurch die Schwingfrequenz bzw. die Taktfrequenz des Ringoszillators.

In einer Weiterbildung des Transponders nach Anspruch 2 umfasst der Ringoszillator mindestens einen Inverter, der als NAND-Gatter oder als NOR-Gatter ausgeführt ist. Das oder die NAND- bzw. NOR-Gatter sind hierbei als Inverter beschaltet. Dies ermöglicht die Verwendung von Standard-Gattern und reduziert somit die Herstellungskosten.

In einer Weiterbildung des Transponders nach Anspruch 3 umfasst der Ringoszillator ein Aktivierungselement für seine Aktivierung und Deaktivierung. Dies ermöglicht beispielsweise die Deaktivierung der Taktversorgung in Zeitintervallen, während denen keine Taktversorgung benötigt wird. Der Stromverbrauch des Transponders reduziert sich entsprechend. Vorteilhaft ist gemäß Anspruch 4 das Aktivierungselement ein NAND-Gatter. Dies ist wiederum einfach unter Verwendung von Standardzellen realisierbar.

In einer Weiterbildung des Transponders nach Anspruch 5 umfasst der Transponder eine Synchronisierungseinheit, die mit der Aktivierungseinheit gekoppelt ist. Die Synchronisierungseinheit kann beispielsweise ein Synchronisationssignal erzeugen, um die Taktversorgungseinheit mit einem externen Taktsignal, welches beispielsweise durch die Basisstation erzeugt wird, zu synchronisieren. Die Aktivierungseinheit aktiviert dann die Taktversorgung in Abhängigkeit vom Synchronisationssignal. Aufgrund des praktisch verzögerungsfreien Loslaufens des Ringoszillators werden somit Jitter-Effekte weitgehend vermieden.

Eine vorteilhafte Ausführungsform der Erfindung ist in den Zeichnungen dargestellt und wird nachfolgend beschrieben. Hierbei zeigen schematisch:
- Fig. 1: ein Blockschaltbild eines Transponders mit einer Taktversorgungseinheit,
- Fig. 2: ein Blockschaltbild eines in Fig. 1 gezeigten Ringoszillators und
- Fig. 3: ein Schaltbild der inneren Struktur eines in Fig. 2 gezeigten Inverters in SCL-Technologie.

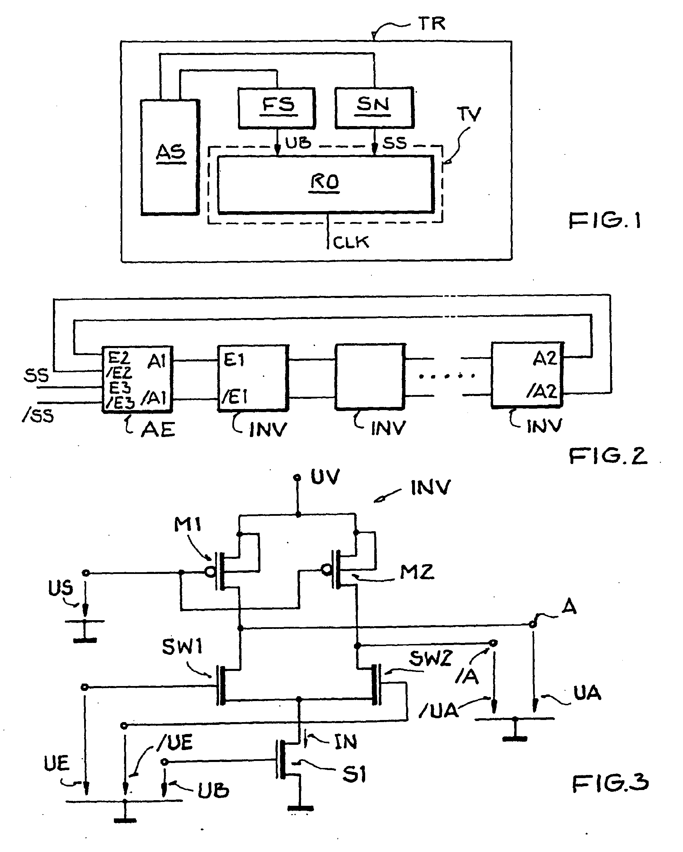

Fig. 1 zeigt ein Blockschaltbild eines passiven Transponders TR, der neben anderen, nicht gezeigten Baugruppen eine Taktversorgungseinheit TV, eine Frequenzsteuereinheit FS, eine Synchronisationseinheit SN und eine Ablaufsteuereinheit AS umfasst.

Die Taktversorgungseinheit TV erzeugt ein Taktsignal CLK und umfasst einen Ringoszillator RO, der in SCL-Technik realisiert ist. Das Taktsignal CLK dient unter anderem zur Kodierung und zur Dekodierung von Telegrammen. Der innere Aufbau des Ringoszillators ist in Fig. 2 detaillierter dargestellt.

Die Ablaufsteuereinheit AS dient zur Ansteuerung der Frequenzsteuereinheit FS und der Synchronisationseinheit SN. Die Ablaufsteuereinheit AS erzeugt die entsprechenden Ansteuersignale für die Frequenzsteuereinheit FS und die Synchronisationseinheit SN in Abhängigkeit vom Betriebszustand des Transponders TR und dessen Programmierung. Die Ablaufsteuereinheit AS kann beispielsweise als Zustandsmaschine implementiert sein.

Die Frequenzsteuereinheit FS ist mit der Taktversorgungseinheit TV gekoppelt und stellt in Abhängigkeit von einer einzustellenden Taktfrequenz, die von der Ablaufsteuerung AS vorgegeben wird, eine Bias-Spannung UB von in SCL-Technologie ausgeführten Gattern des Ringoszillators RO ein. Die Bias-Spannung UB bestimmt die jeweilige Gatterlaufzeit und dadurch die Schwing- bzw. Eigenfrequenz des Ringoszillators RO. Dies ermöglicht eine Frequenzanpassung an bestimmte Umgebungsrandbedingungen.

Die Synchronisationseinheit SN ist ebenfalls mit der Taktversorgungseinheit TV gekoppelt und erzeugt ein Synchronisationssignal SS, das zur Aktivierung bzw. Deaktivierung des Ringoszillators RO dient. Dies ermöglicht eine Synchronisierung mit externen Taktquellen, beispielsweise beim Empfang von Telegrammen einer nicht gezeigten Basisstation durch den Transponder TR, wodurch Jitter-Effekte weitgehend eliminierbar sind. Weiterhin ist der Ringoszillator während Phasen, in denen keine Kommunikation stattfindet, deaktivierbar.

Fig. 2 zeigt ein Blockschaltbild des inneren Aufbaus des in Fig. 1 gezeigten Ringoszillators RO. Der Ringoszillator RO umfasst eine gerade Anzahl n, beispielsweise 20, von Invertern INV, die in SCL-Technologie realisiert sind, und ein Aktivierungselement AE in Form eines NAND-Gatters, welches im aktivierten Zustand als weiterer Inverter innerhalb der Inverterkette wirkt, wodurch sich insgesamt eine ungerade Anzahl n+1 von Invertern ergibt. Die Inverter INV können als dezidierte Inverter-Zellen, als herkömmliche NAND-Gatter und/oder als NOR-Gatter ausgeführt sein, die jeweils als Inverter beschaltet sind.

Die Ein- bzw. Ausgange der in Fig. 2 gezeigten Gatter sind entsprechend der verwendeten SCL-Technologie als differentielle Ein- bzw. Ausgänge, d.h. als Ein- bzw. Ausgangspaare ausgeführt.

Die Inverter INV und das Aktivierungselement AE sind in Serie geschaltet, wobei ein Ausgangspaar A1 und /A1 des Aktivierungselements AE mit einem Eingangspaar E1 und /E1 eines ersten Inverters INV in der Inverterkette verbunden ist, anschließend jeweils ein Ausgangspaar eines vorhergehenden Inverters INV mit jeweils einem Eingangspaar eines nachfolgenden Inverters INV verbunden ist und ein Ausgangspaar A2 und /A2 eines letzten Inverters INV der Inverterkette mit einem Eingangspaar E2 und /E2 des als NAND-Gatter ausgeführten Aktivierungselements AE verbunden ist.

Ein Eingangspaar E3 und /E3 des Aktivierungselements AE ist mit der Synchronisationseinheit SN von Fig. 1 gekoppelt. Die Synchronisationseinheit SN beaufschlagt das Eingangspaar E2 und /E2 mit den differentiellen Synchronisationssignalen SS und /SS, wobei in Fig. 1 aus Gründen der besseren Übersicht lediglich das Signal SS gezeigt ist. Wenn am Eingangspaar E3 und /E3 eine logische "1" anliegt, ist der Ringoszillator aktiviert, d.h. das Aktivierungselement wirkt lediglich als ein weiterer Inverter innerhalb der Inverterkette. Wenn am Eingangspaar E3 und /E3 eine logische "0" anliegt, liegt am Ausgang des Aktivierungselements AE statisch eine logische "1" an, d.h. eine Oszillation des Ringoszillators wird verhindert. Die Inverter INV der Inverterkette nehmen daraufhin alle einen definierten Zustand ein, wodurch ein sofortiges Anschwingen nach einer erneuten Aktivierung sichergestellt wird.

Fig. 3 zeigt ein Schaltbild der inneren Struktur eines in Fig. 2 gezeigten Inverters INV in SCL-Technologie. Der Inverter umfasst PMOS-Transistoren M1 und M2, die als sogenannte aktive Lasten dienen. Durch eine an ihren jeweiligen Gate-Elektroden anliegende Steuerspannung US kann ein Signalspannungshub UH von Ausgangsspannungen UA und /UA an Ausgängen A und /A des Inverters INV beeinflusst werden. Aufgrund der differentiellen Darstellung bzw. Übertragung der Ausgangssignale des Inverters INV und der daraus resultierenden Unempfindlichkeit gegenüber Gleichtaktstörungen kann die Steuerspannung US derart gewählt werden, dass sich ein geringer Signalspannungshub UH ergibt. Dies führt zu einem reduzierten Stromverbrauch des Inverters INV. Der Signalspannungshub UH kann beispielsweise ein Zehntel einer Versorgungsspannung UV des Inverters INV betragen.

Der Inverter INV umfasst weiterhin NMOS-Transistoren SW1 und SW2, die als Schalter wirken. Der Schaltzustand der Transistoren SW1 und SW2 wird durch den Zustand von Einganssignalen UE bzw. /UE bestimmt. In Abhängigkeit von ihrem Schaltzustand liegt an den Ausgängen A bzw. /A entweder die Versorgungsspannung UV oder eine Spannung UV - UH an.

Ein weiterer NMOS-Transistor S1 dient zur Einstellung der Gatterlaufzeit des Inverters INV. Die Gatterlaufzeit wird durch die Bias-Spannung UB bestimmt, die an einer Gate-Elektrode des Transistors S1 anliegt. Die Bias-Spannung UB steuert einen Querstrom IN durch den Transistor S1 und bestimmt folglich, neben der Steuerspannung US, den Stromverbrauch des Inverters INV.

Die für einen Inverter INV gezeigte Struktur ist ebenfalls auf die in SCL-Technologie als NAND-Gatter ausgeführte Aktivierungseinheit AE übertragbar, deren Gatterlaufzeit auch durch die Spannung UB gesteuert wird.

Im gezeigten Ausführungsbeispiel stellt die Frequenzsteuereinheit FS lediglich die Bias-Spannung UB ein, welche die Gatterlaufzeit der Inverter INV und der Aktivierungseinheit AE bestimmt. Die Frequenzsteuereinheit FS kann selbstverständlich auch die Steuerspannung US einstellen, die im Zusammenhang mit der SCL-Technologie häufig ebenfalls als Bias-Spannung bezeichnet wird.

Die im Ausführungsbeispiel gezeigte Taktversorgungseinheit TV des Transponders TR ist verzögerungsfrei aktivierbar und deaktivierbar und ermöglicht somit eine Synchronisierung der Taktversorgung mit externen Taktquellen. Dies verhindert wirksam das Auftreten von Jitter-Problemen, beispielsweise beim Empfangen von Daten von der Basisstation. Weiterhin ist die Frequenz einfach einstellbar und der Stromverbrauch gering.

## Patentansprüche

1. Passiver oder semipassiver Transponder (TR) mit einer Taktversorgungseinheit (TV), die einen Ringoszillator (RO) umfasst,
**dadurch gekennzeichnet, dass**
- der Ringoszillator (RO) in Source-Coupled-Logik-Technik aufgebaut ist und
- eine Frequenzsteuereinheit (FS) vorgesehen ist, die in Abhängigkeit von einer einzustellenden Taktfrequenz eine Bias-Spannung (UB) eines Source-Coupled-Logik-Bausteins des Ringoszillators einstellt.

2. Transponder (TR) nach Anspruch 1, **dadurch gekennzeichnet, dass** der Ringoszillator (RO) mindestens einen Inverter (INV) umfasst, der als NAND-Gatter oder als NOR-Gatter ausgeführt ist.

3. Transponder (TR) nach Anspruch 1 oder 2, **dadurch gekennzeichnet, dass** der Ringoszillator (RO) ein Aktivierungselement (AE) für seine Aktivierung und Deaktivierung umfasst.

4. Transponder (TR) nach Anspruch 3, **dadurch gekennzeichnet, dass** das Aktivierungselement (AE) ein NAND-Gatter ist.

5. Transponder (TR) nach Anspruch 3 oder 4, **gekennzeichnet durch** eine Synchronisierungseinheit (SN), die mit der Aktivierungseinheit (AE) gekoppelt ist.

## Claims

1. Passive or semi-passive transponder (TR) with a clock pulse supply unit (TV) comprising a ring oscillator (RO), **characterised in that**
- the ring oscillator (RO) is incorporated in source-coupled logic technology and
- a frequency control unit (FS) is provided, which in dependence on a clock frequency to be set sets a bias voltage (UB) of a source-coupled logic component of the ring oscillator.

2. Transponder (TR) according to claim 1, **characterised in that** the ring oscillator (R1) comprises at least one inverter (INV) constructed as a NAND gate or as a NOR gate.

3. Transponder (TR) according to claim 1 or 2, **characterised in that** the ring oscillator (RO) comprises an activation element (AE) for activation and deactivation thereof.

4. Transponder (TR) according to claim 3, **characterised in that** the activation element (AE) is a NAND gate.

5. Transponder (TR) according to claim 3 or 4, **characterised by** a synchronisation unit (SN) coupled with the activation unit (AE).

## Revendications

1. Transpondeur (TR) passif ou semi-passif comprenant une unité d'impulsions d'horloge qui comporte un oscillateur annulaire (RO), **caractérisé en ce que** :
. l'oscillateur annulaire (RO) est réalisé selon la technique SCL, et
. on prévoit une unité de commande de fréquence (FS) qui règle une tension de polarisation (UB) d'un sous-ensemble de SCL de l'oscillateur annulaire en fonction d'une fréquence d'impulsion à régler.

2. Transpondeur (TR) selon la revendication 1, **caractérisé en ce que** l'oscillateur annulaire (RO) comprend au moins un inverseur (INV) réalisé sous la forme d'une porte *E̅T̅* ou *O̅U̅.*

3. Transpondeur (TR) selon la revendication 1 ou 2, **caractérisé en ce que** l'oscillateur annulaire (RO) comporte un élément d'activation (AE) servant à l'activer et à le désactiver.

4. Transpondeur (TR) selon la revendication 3, **caractérisé en ce que** l'élément d'activation (AE) est une porte *E̅T̅.*

5. Transpondeur (TR) selon la revendication 3 ou 4, **caractérisé par** une unité de synchronisation (SN) couplée à l'unité d'activation (AE).
